# EUROPÄISCHE PATENTSCHRIFT

(11) **EP 0 511 247 B1**
(45) Veröffentlichungstag und Bekanntmachung des Hinweises auf die Patenterteilung: **07.09.1994**
(21) Anmeldenummer: 91902094.1
(22) Anmeldetag: 11.01.1991
(51) Int. Cl.: G11B 19/20

(54) **VORRICHTUNG ZUR BESEITIGUNG DES AXIAL- UND RADIALSPIELS EINER ROTIERENDEN ACHSE**
DEVICE FOR ELIMINATING THE AXIAL AND RADIAL PLAY OF AN AXLE
DISPOSITIF POUR LA SUPPRESSION DU JEU AXIAL ET RADIAL D'UN AXE EN ROTATION

(30) Priorität: 18.01.1990 DE 4001257
(43) Veröffentlichungstag der Anmeldung: 04.11.1992
(73) Patentinhaber: Deutsche Thomson-Brandt GmbH, 78003 Villingen-Schwenningen (DE)
(72) Erfinder: ELSÄSSER, Axel, D-7730 Villingen-Schwenningen (DE)
(86) Internationale Anmeldenummer: EP9100037
(87) Internationale Veröffentlichungsnummer: WO9110996

(56) Entgegenhaltungen:
- DE-A- 3 528 121
- GB-A- 2 180 413
- US-A- 4 730 299
- PATENT ABSTRACTS OF JAPAN, vol. 5, no. 142 (P-79)(814), 8 September 1981
- IBM TECHNICAL DISCLOSURE BULLETIN, vol. 30, no. 8, January 1988, New York, US, pages 101-102; "Radial Preload of Floating Bearings"

## Beschreibung

Die Erfindung betrifft eine Vorrichtung zur Beseitigung des Axial- und Radialspiels einer rotierenden Achse, auf der eine Scheibe sitzt und die durch ein fest angeordnetes Befestigungsteil geführt ist, wobei für die Scheibe und das Befestigungsteil Materialien gewählt sind, zwischen denen eine magnetische Kraft wirkt.

Bei Elektromotoren, die z.B. bei CD-Spielern die Platte drehen, wird das Axialspiel der Motorachse durch eine magnetische Kraftkopplung in axialer Richtung beseitigt. Die magnetische Kraftkopplung wird z.B. mittels eines scheibenförmigen Magneten, der auf der Motorachse sitzt, und einem fest angeordneten Flansch aus ferromagnetischem Material erzielt.

Es ist jedoch auch möglich, auf der Motorachse eine metallische Scheibe vorzusehen und den Magneten am Gehäuse zu befestigen. Um eine stärkere magnetische Anziehungskraft zu erzielen, können sowohl auf der Motorachse als auch am Gehäuse ein Magnet angeordnet sein.

Neben dem Axialspiel sollte aber auch das Spiel in radialer Richtung, das Radialspiel der Motorachse, beseitigt werden. Es ist z.B. bekannt, das Radialspiel mittels einer Schenkelfeder zu unterdrücken. Die Kombination aus beiden Lösungen - Beseitigung des Axialspiels durch magnetische Kraftkopplung und des Radialspiels mittels einer Schenkelfeder - hat den Nachteil, daß neben einem Magneten auch eine Feder benötigt wird, die dem Verschleiß unterliegt, zusätzliche Reibung verursacht und unter ungünstigen Umständen sogar zum Festfressen der Motorachse führen kann. Außerdem ist der Aufwand zur Montage des Magneten und insbesondere der Schenkelfeder relativ groß.

In der US-PS 4 730 299 ist ein Plattenantrieb mit einer Achse beschrieben, auf der die Platte auf einem Plattenteller liegt. Die Achse sitzt auf einer Scheibe, auf der ein Ringmagnet angeordnet ist, durch dessen Mittelloch die Achse ragt. Der Ringmagnet ist von einem ringförmigen Joch umgeben. Auf die Achse ist ein Plattenteller aufgesteckt, an dessen dem Ringmagneten zugewandter Unterseite eine dem Querschnitt des Ringmagneten angepaßte Scheibe angeordnet ist.

Zwischen dem Ringmagneten und der Scheibe wirkt eine magnetische Kraft in axialer Richtung, die das Axialspiel verringert. Zwischen der Scheibe und dem Ringmagneten wirkt auch eine magnetische Kraft in radialer Richtung, die das Radialspiel verringert.

Radial gegenüber der einen Seite des Jochs wirkt ebenfalls eine Anziehungskraft auf die Scheibe, jedoch in genau entgegengesetzter Richtung. Zwar ist die magnetische Kraft, die von der einen Seite des Jochs auf die Scheibe ausgeht infolge der Unsymmetrie - der Abstand zwischen der einen Seite des Jochs und der Scheibe ist geringer gewählt als der Abstand zwischen der anderen Seite des Jochs und der Scheibe - kleiner als die Anziehungskraft zwischen der anderen Seite des Jochs und der Scheibe .

Wenn nun aber infolge eines Stoßes von außen der Plattenteller zur anderen Seite des Jochs hin ausgelenkt wird, vergrößert sich der Abstand zwischen der Scheibe und der einen Seite des Jochs, während er sich zwischen der anderen Seite des Jochs und der Scheibe verringert. Dies hat zur Folge, daß die magnetische Kraft zwischen der einen Seite des Jochs und der Scheibe, die Rückstellkraft, abnimmt, während die Kraft zwischen der Scheibe und der anderen Seite des Jochs zunimmt, die in Richtung der auslenkenden Kraft wirkt. Weil bei einer Auslenkung deshalb die Rückstellkraft abnimmt, die auslenkende Kraft dagegen sogar zunimmt, wird bei Stößen von außen das Radialspiel nicht verringert, sondern sogar vergrößert.

Es ist deshalb Aufgabe der Erfindung, bei einem Motor, bei dem das Spiel der Motorachse in axialer Richtung durch eine magnetische Kraftkopplung beseitigt wird, mit möglichst einfachen Mitteln das Radialspiel auch für den Fall zu beseitigen, daß der Motor Stößen von außen ausgesetzt ist.

Die Erfindung löst diese Aufgabe dadurch, daß auf einem Teil des Befestigungsteils ein dem Bogen der Scheibe angepaßtes Bogenteil vorgesehen ist, das neben der Projektionsfläche der Scheibe auf das Befestigungsteil angeordnet ist und daß zwischen dem Bogenteil und der Scheibe eine magnetische Kraft wirkt.

Es zeigen
- Figur 1: ein erstes Ausführungsbeispiel der Erfindung in Seitenansicht
- Figur 2: das erste Ausführungsbeispiel in Draufsicht
- Figur 3: ein zweites Ausführungsbeispiel in Seitenansicht
- Figur 4: das zweite Ausführungsbeispiel in Draufsicht.

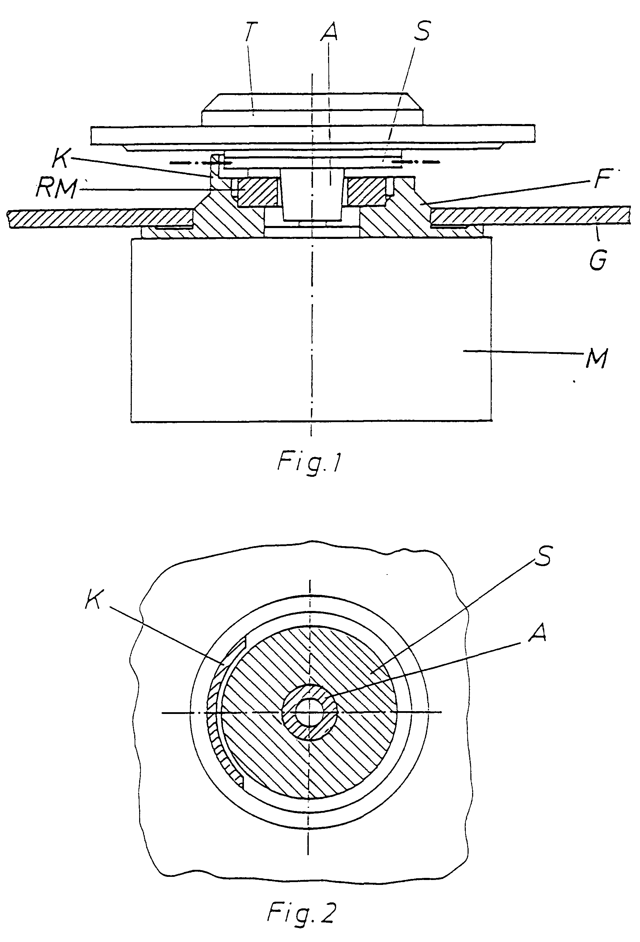

An Hand des in den Figuren 1 und 2 gezeigten ersten Ausführungsbeispieles wird die Erfindung nun beschrieben und erläutert.

In der Figur 1 ist ein Motor M zum Antrieb der Platte eines CD-Spielers an einem Flansch F aus ferromagnetischem Material befestigt, der an einem Gehäuse G angebracht ist. Im Flansch F ist ein Ringmagnet RM angeordnet, durch dessen öffnung die Motorachse A ragt, die den Ringmagneten RM jedoch nicht berührt. Auf der Motorachse A sitzt eine Scheibe S aus ferromagnetischem Material über der der Auflageteller T für eine Platte angeordnet ist. Am Flansch F ist neben der Scheibe S ein Bogenteil K vorgesehen.

Weil zwischen dem Ringmagneten RM und der Scheibe S eine magnetische Anziehungskraft in axialer Richtung Richtung wirkt, wird das Axialspiel der Motorachse A beseitigt. Weil zwischen dem Bogenteil K und der Scheibe S aber auch eine magnetische Anziehungskraft in radialer Richtung wirkt, wird das Radialspiel der Motorachse A ebenfalls beseitigt, ohne daß hierzu eine Feder oder weitere Magnete erforderlich wären.

Es ist auch möglich, auf der Motorachse einen Ringmagneten anstelle der Scheibe vorzusehen.

Die Erfindung ist besonders einfach und billig herzustellen, weil die zur Beseitigung des Axialspiels vorgesehenen Bauteile - die Scheibe S, der Ringmagnet RM sowie der Flansch F - durch die einfache Maßnahme, neben der Scheibe S am Flansch F ein Bogenteil K vorzusehen, auch das Radialspiel der Motorachse A beseitigen.

In der in Figur 2 dargestellten Draufsicht sind das neben der Scheibe S angeordnete Bogenteil K und die Motorachse A zu sehen.

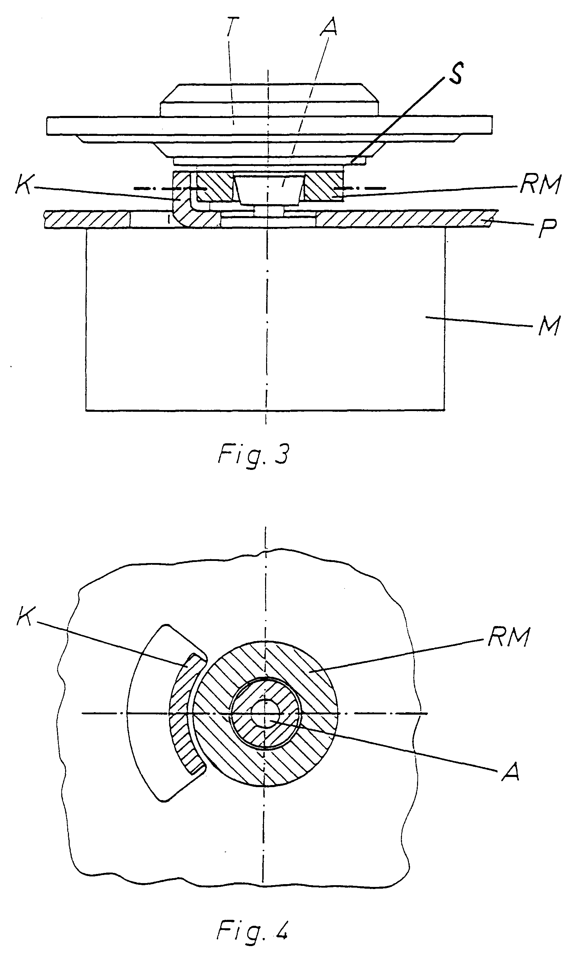

Es wird nun das in den Figuren 3 und 4 abgebildete zweite Ausführungsbeispiel der Erfindung beschrieben und erläutert.

In der Figur 3 ist der Motor M des Plattenantriebs eines CD-Spielers an einer Metallplatte P befestigt. Auf der Motorachse A sitzt ein Ringmagnet RM, über dem der Auflageteller T für die Platte angeordnet ist. Neben der Scheibe S ist auf der Metallplatte P ein Bogenteil K angeordnet, das z.B. aus der Metallplatte P gestanzt sein kann. Weil zwischen dem auf der Motorachse A sitzenden Ringmagneten RM und der Metallplatte P, auf welcher der Motor M befestigt ist, eine magnetische Anziehungskraft wirkt, wird das Axialspiel der Motorachse A beseitigt.

Wegen des aus der Metallplatte gestanzten Bogenteils K, das neben dem Ringmagneten RM angeordnet ist, wirkt auch eine magnetische Anziehungskraft in radialer Richtung, so daß auch das Radialspiel der Motorachse A beseitigt wird. Ebenso wie beim ersten Ausführungsbeispiel dienen die zur Beseitigung des Axialspiels der Motorachse A erforderlichen Bauteile - der auf der Motorachse A sitzende Ringmagnet RM und die Metallplatte P, an der der Motor M befestigt ist - auch zur Beseitigung des Radialspiels.

Durch die einfache Maßnahme, aus der Metallplatte P eine Nase oder ein Bogenteil so zu stanzen, daß es neben dem Ringmagneten RM angeordnet ist, wird neben dem Axialspiel auch das Radialspiel der Motorachse A beseitigt.

Die Erfindung ist zur Beseitigung des Axial- und Radialspiels einer Achse geeignet. Besonders vorteilhaft läßt sich die Erfindung zur Beseitigung des Radial- und Axialspiels beim Motor des Plattenantriebs in einem Aufzeichnungs- und/oder Wiedergabegerät einsetzen. Als Beispiele seien CD-Spieler, Videoplattenspieler, DRAW-Disc-Spieler und magneto-optische Geräte genannt.

## Patentansprüche

1. Vorrichtung zur Beseitigung des Radial- und Axialspiels einer Achse (A), auf der eine Scheibe (S, RM) sitzt und die durch ein fest angeordnetes Befestigungsteil (F, P) geführt ist, wobei für die Scheibe (S, RM) und das Befestigungsteil (F, P) Materialien gewählt sind, zwischen denen eine magnetische Kraft wirkt, **dadurch gekennzeichnet**, daß auf einem Teil des Befestigungsteils (F, P) ein dem Bogen der Scheibe (S, RM) angepaßtes Bogenteil (K) vorgesehen ist, das neben der Projektionsfläche der Scheibe (S, RM) auf dem Befestigungsteil (F, P) angeordnet ist und daß zwischen dem Bogenteil (K) und der Scheibe (S, RM) eine magnetische Kraft wirkt.

2. Vorrichtung nach Anspruch 1, **dadurch gekennzeichnet**, daß das Bogenteil (K) bis in Scheibenhöhe vorspringt,

3. Vorrichtung nach Anspruch 1 oder 2, **dadurch gekennzeichnet**, daß das Befestigungsteil ein Flansch (F) ist, daß ein Lager (M) der Achse (A) an dem Flansch (F) befestigt ist, daß der Flansch (F) an einem Gehäuse (G) befestigt ist, daß im Flansch (F) ein Ringmagnet (RM) liegt, durch dessen öffnung die Achse (A) geführt ist, und daß am Flansch (F) neben der Scheibe (S) das Bogenteil (K) vorgesehen ist.

4. Vorrichtung nach Anspruch 3, **dadurch gekennzeichnet**, daß der Flansch (F) und das Bogenteil (K) aus einem Stück Metall gefertigt ist.

5. Vorrichtung nach Anspruch 1 oder 2, **dadurch gekennzeichnet**, daß auf der Achse (A) ein Ringmagnet (RM) sitzt, daß das Befestigungsteil eine Platte (P) ist, daß ein Lager (M) der Achse (A) an der Platte (P) befestigt ist und daß auf der Platte (P) neben dem Ringmagneten (RM) das Bogenteil (K) angeordnet ist.

6. Vorrichtung nach Anspruch 5, **dadurch gekennzeichnet**, daß die Platte (P) und das Bogenteil (K) aus ferromagnetischem Material gefertigt sind.

7. Vorrichtung nach Anspruch 5 oder 6, **dadurch gekennzeichnet**, daß das Bogenteil (K) durch Stanzen aus der Platte (P) geformt ist.

8. Vorrichtung nach Anspruch 1, 2, 3, 4, 5, 6 oder 7, **dadurch gekennzeichnet**, daß es sich bei der Achse (A) um die Achse eines Motors (M) des Plattenantriebs für ein Aufzeichnungs- und/oder Wiedergabegerät handelt.

## Claims

1. Device for eliminating the axial and radial play of an axle (A) upon which rests a disc (S, RM) and which is carried by a fixedly arranged attachment part (F, P), wherein materials between which a magnetic force is effective are selected for the disc (S, RM) and the attachment part (F, P), characterised in that, a curved part (K) which is matched to the curve of the disc (S, RM) is provided on a part of the attachment part (F, P), which curved part (K) is arranged adjacent to the projection area of the disc (S, RM) upon the attachment part (F, P), and that a magnetic force is effective between the curved part (K) and the disc (S, RM).

2. Device in accordance with Claim 1, characterised in that, the curved part (K) projects up to the level of the disc.

3. Device in accordance with Claim 1 or 2, characterised in that, the attachment part is a flange (F), that a mounting (M) for the axle (A) is attached to the flange (F), that the flange (F) is attached to a housing (G), that a ring magnet (RM), through whose opening the axle (A) is guided, is located in the flange (F), and that the curved part (K) is provided on the flange (F) adjacent to the disc (S).

4. Device in accordance with Claim 3, characterised in that, the flange (F) and the curved part (K) are produced from one piece of metal.

5. Device in accordance with Claim 1 or 2, characterised in that, a ring magnet (RM) is located on the axle (A), that the attachment part is a plate (P), that a mounting (M) for the axle (A) is attached to the plate (P), and that the curved part (K) is arranged on the plate (P) adjacent to the ring magnet (RM).

6. Device in accordance with Claim 5, characterised in that, the plate (P) and the curved part (K) are produced from ferromagnetic material.

7. Device in accordance with Claim 5 or 6, characterised in that, the curved part (K) is formed by stamping from the plate (P).

8. Device in accordance with Claim 1, 2, 3, 4, 5, 6 or 7, characterised in that, the axle (A) is the axle of a motor (M) of the disc drive for a recording and/or reproduction apparatus.

## Revendications

1. Dispositif pour supprimer le jeu radial et le jeu axial d'un axe (A), sur lequel est logée une plaque (S, RM) et qui est guidé à travers une pièce de fixation (F, P) placée de manière fixe, des matériaux entre lesquels une force magnétique agit étant choisis pour la plaque (S, RM) et la pièce de fixation (F, P), **caractérisé en ce** qu'une pièce arquée (K) adaptée à l'arc de la plaque (S, RM) est prévue sur une partie de la pièce de fixation (F, P), pièce arquée qui est placée à côté de la surface de projection de la plaque (S, RM) sur la pièce de fixation (F, P) et qu'une force magnétique agit entre la pièce arquée (K) et la plaque (S, RM).

2. Dispositif selon la revendication 1, **caractérisé en ce** que la pièce arquée (K) fait saillie jusqu'à hauteur de la plaque.

3. Dispositif selon la revendication 1 ou 2, **caractérisé en ce** que la pièce de fixation est une bride (F), qu'un palier (M) de l'axe (A) est fixé à la bride (F), que la bride (F) est fixée à un bâti (G), qu'un aimant annulaire (RM), à travers l'ouverture duquel l'axe (A) est guidé, se situe dans la bride (F) et que la pièce arquée (K) est prévue sur la bride (F) à côté de la plaque (S).

4. Dispositif selon la revendication 3, **caractérisé en ce** que la bride (F) et la pièce arquée (K) sont fabriquées en une pièce de métal.

5. Dispositif selon la revendication 1 ou 2, **caractérisé en ce** qu'un aimant annulaire (RM) est logé sur l'axe (A), que la pièce de fixation est une plaque (P), qu'un palier (M) de l'axe (A) est fixé à la plaque (P) et que la pièce arquée (K) est placée sur la plaque (P) à côté de l'aimant annulaire (RM).

6. Dispositif selon la revendication 5, **caractérisé en ce** que la plaque (P) et la pièce arquée (K) sont fabriquées en matière ferromagnétique.

7. Dispositif selon la revendication 5 ou 6, **caractérisé en ce** que la pièce arquée (K) est formée par découpage de la plaque (P).

8. Dispositif selon la revendication 1, 2, 3, 4, 5, 6 ou 7, **caractérisé en ce** qu'il s'agit pour l'axe (A) de l'axe d'un moteur (M) de l'entraînement du disque pour un appareil d'enregistrement et/ou de reproduction.
